# EUROPÄISCHE PATENTSCHRIFT

(11) **EP 2 273 655 B1**
(45) Veröffentlichungstag und Bekanntmachung des Hinweises auf die Patenterteilung: **21.03.2012**
(21) Anmeldenummer: 09008831.1
(22) Anmeldetag: 07.07.2009
(51) Int. Cl.: H02K 21/24, H02K 5/128, H02K 1/22

(54) **Elektrische Maschine**
Electric machine
Machine électrique

(43) Veröffentlichungstag der Anmeldung: 12.01.2011
(73) Patentinhaber: Dietz-motoren GmbH & Co. KG, 73265 Dettingen/Teck (DE)
(72) Erfinder: Barth, Andreas, 74538 Rosengarten (DE); Strauß, Bernd, 72800 Eningen (DE)
(74) Vertreter: Ruckh, Rainer Gerhard

(56) Entgegenhaltungen:
- EP-A- 1 796 249
- DE-A1- 10 003 153
- JP-A- 10 271 890

## Beschreibung

Die Erfindung betrifft eine elektrische Maschine gemäß dem Oberbegriff des Anspruchs 1.

Aus der EP 1 796 249 A1 ist eine elektrische Maschine bekannt, die als Motor oder Generator betrieben werden kann. Sie besteht aus einem Gehäuse, einer in diesem gelagerten und aus diesem herausgeführten Rotorwelle und einem im Gehäuse integrierten Rotor und Stator. Der Rotor umfasst eine drehfest mit der Rotorwelle verbundene Rotorscheibe. Auf deren dem Stator zugewandten Stirnseite sind Permanentmagnetsegmente angeordnet, welche in Umfangsrichtung aufeinander folgend jeweils eine entgegen gesetzte Polarität aufweisen. Der Stator weist einen ein Joch bildenden Blechpaketring auf, welcher Nuten zur Aufnahme von Spulenwicklungen aufweist. Zwischen Rotor und Stator ist bezüglich der Drehachse der Rotorwelle ein axiales Luftspaltfeld generiert. Innerhalb des Jochs erfolgt eine Magnetflussumkehr.

Ein Vorteil dieser elektrischen Maschine besteht darin, dass diese als Rotor nur eine Rotorscheibe aufweist, auf deren dem Stator zugewandten Stirnseite die Permanentmagnetsegmente angeordnet sind. Dies führt zu einer erheblichen Reduzierung der Teile der elektrischen Maschine und damit zu einer kleinen Bauform sowie zu einer beträchtlichen Reduktion der Herstellkosten der elektrischen Maschine.

Um derartige Systeme in Applikationen einsetzen zu können, in welchen externe Umgebungsbedingungen herrschen, wie zum Beispiel hohe Über- oder Unterdrücke oder aggressive chemische Medien, welchen die elektrische Maschine ausgesetzt ist, ist es erforderlich, die elektrische Maschine hermetisch oder wenigstens halbhermetisch zu kapseln, um Beschädigungen zu vermeiden.

Ein gravierendes Problem besteht hierbei darin, die für den Betrieb der elektrischen Maschine notwendige Energie in die elektrische Maschine hineinzuführen. Dies geschieht in der Regel mittels teurer Spezialdurchführungen durch die hermetische Kapselung, welche die Dichtigkeit des gekapselten Systems nicht beeinträchtigen dürfen. Beispielsweise ist es möglich, die Rotorwelle des Rotors aus der hermetischen Kapselung der elektrischen Maschine herauszuführen um dann durch elektrische Anschlussmittel an dem aus der hermetischen Kapselung herausragenden Ende der Rotorwelle die elektrische Leistungszufuhr für die elektrische Maschine zu realisieren. Nachteilig hierbei ist, dass die Nahtstelle zwischen Rotorwelle und hermetischer Kapselung mit geeigneten Dichtmitteln hermetisch abzuschließen, was einen erheblichen konstruktiven Aufwand bedeutet und die Herstellkosten der elektrischen Maschine in unerwünschter Weise erhöht.

Eine gattungsgemäße elektrische Maschine mit den Merkmalen des Oberbegriffs des Anspruchs 1 und mit einem Turboradialgebläse ist aus der DE 100 03 153 A1 bekannt. Das Turboradialgebläse weist einen Stator auf, der in einem Statorgehäuse enthalten ist, und ein in einem Pumpengehäuse rotierendes Laufrad. Das Laufrad enthält einen Hohlraum mit einer Lageranordnung, die auf einem abstehenden Lagerdorn gelagert ist. Der Pumpenraum ist von dem Statorraum durch eine dünne Trennwand getrennt. Dadurch wird in dem Statorraum Atmosphärendruck aufrechterhalten.

Der Erfindung liegt die Aufgabe zugrunde, eine elektrische Maschine der eingangs genannten Art bereitzustellen, welche bei geringem konstruktivem Aufwand in aggressiven Umgebungsbedingungen einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die erfindungsgemäße elektrische Maschine ist als Motor oder Generator betreibbar und umfasst einen Stator und einen um eine Drehachse drehbaren Rotor. Zwischen Rotor und Stator ist ein bezüglich der Drehachse axiales Luftspaltfeld generiert. Der Rotor ist in einem hermetisch oder halbhermetisch gekapselten Gehäuse integriert. Zwischen Rotor und Stator ist eine nichtmetallische Gehäusewand angeordnet, die Bestandteil des Gehäuses ist. Der Stator ist an einem Statorträger befestigt. Als mechanische Verbindung zwischen Gehäuse und Statorträger ist ein Zwischengehäuse vorgesehen. Der Stator ist mit einer Vergußmasse mit hoher Wärmeleitfähigkeit an das Gehäuse und das Zwischengehäuse und den Statorträger thermisch angebenden.

Der Grundgedanke der Erfindung besteht darin, allein den Rotor in einem hermetisch oder halbhermetisch dichten Gehäuse zu kapseln, nicht jedoch den Stator. Der Rotor als bewegliches Teil der elektrischen Maschine treibt ein Arbeitsmittel zur Durchführung von Arbeitsvorgängen an und ist daher den aggressiven Umgebungsbedingungen, in welchen die Arbeitsvorgänge durchgeführt werden, ausgesetzt. Vorteilhaft ist dabei das Arbeitsmittel selbst in dem Gehäuse angeordnet. Dieses Arbeitsmittel kann dabei von einem Ventilator, der aus Ventilatorflügeln besteht, gebildet sein. Insbesondere kann das Arbeitsmittel von einem Verdichter gebildet sein, der dazu dient, ein Kühlmittel in einem Kälteaggregat zu verdichten. Das Kühlmittel besteht aus chemisch aggressiven Stoffen, die die Komponenten der elektrischen Maschine zerstören würden. Durch die hermetische oder halbhermetische Kapselung des Rotors mit dem Arbeitsmittel sind jedoch diese Komponenten der elektrischen Maschine wirksam gegen das Kühlmittel geschützt.

Der Stator der erfindungsgemäßen elektrischen Maschine liegt jedoch außerhalb des hermetische oder halbhermetisch dichten Gehäuses. Dieser Aufbau wird dadurch erreicht, dass zwischen dem Rotor und dem Stator eine Gehäusewand aus nichtmetallischem Material vorgesehen ist, wobei diese Bestandteil des Gehäuses ist. Durch die Gehäusewand wird die Wechselwirkung zwischen Rotor und Stator nicht beeinträchtigt, da diese aus nicht metallischem Material besteht. Andererseits bildet die Gehäusewand als Bestandteil des Gehäuses eine einfache und kostengünstig herstellbare Trennfläche zum Stator als nicht hermetisch oder halbhermetisch gekapselten Bestandteil der elektrischen Maschine.

Da der Stator außerhalb des hermetisch oder halbhermetisch gekapselten Bereichs der elektrischen Maschine liegt, können auf diesen sämtliche elektrischen Anschlüsse, die insbesondere zur Zufuhr der elektrischen Leistung benötigt werden, geführt werden. Da der Stator außerhalb des aggressiven Mediums liegt, welchem der Rotor ausgesetzt ist, können die elektrischen Anschlussmittel in herkömmlicher Weise, insbesondere in Form galvanischer Verbindungen auf den Stator gerührt werden, ohne dass hierfür ein konstruktiver Mehraufwand betrieben werden muss.

Die erfindungsgemäße elektrische Maschine weist durch das axiale Luftspaltfeld zwischen Rotor und Stator einen kompakten und damit kostengünstigen Aufbau auf.

Vorteilhaft weist der Rotor eine um die Drehachse drehbare Rotorwelle und eine an der Rotorwelle gelagerte Rotorscheibe auf, an deren dem Stator zugewandten Stirnseite Permanentmagnetsegmente angeordnet sind. Dabei ist an der Rotorwelle das Arbeitsmittel befestigt.

In einer vorteilhaften Ausführungsform der Erfindung weist der Stator als Joch einen Blechpaketring auf, wobei auf dem Blechpaketring Spulenwicklungen aufgebracht sind. Dabei weist der Blechpaketring Nuten zur Aufnahme der Spulenwicklungen auf. Der so ausgebildete Stator ist besonders kostengünstig herstellbar.

Eine wesentliche Voraussetzung dafür, dass eine Rotorscheibe zur Ausbildung des Rotors ausreichend ist, ist eine geeignete Dimensionierung des Jochs des Stators in Form des Blechpaketrings. Dabei sind insbesondere die Höhe des Blechpaketrings sowie die Dimensionierung der Nuten zur Aufnahme der Spulenwicklungen so dimensioniert, dass eine vollständige Umkehr des magnetischen Flusses im Blechpaketring erfolgen kann. Damit ist gewährleistet, dass während des Betriebs der elektrischen Maschine, bei welchem durch die Ströme in den Spulenwicklungen des Stators ein magnetisches Drehfeld erzeugt wird, der Magnetfluss vollständig innerhalb des Jochs geführt wird.

Der Stator selbst ist an einem Statorträger befestigt.

Die Entwärmung der erfindungsgemäßen elektrischen Maschine erfolgt je nach Betriebsart der Maschine mittels freier Konvektion über das Gehäuse der Maschine, wobei hierzu der Gehäusemantel mit Kühlrippen zur Oberflächenvergrößerung versehen sein kann. Möglich sind auch alle bekannten Verfahren der Oberflächenkühlung mittels Belüftungseinheit, als Eigenbelüftung oder Fremdbelüftung, sowie Verfahren der Flüssigkeitskühlung über Kühlkanäle, die im Gehäusemantel eingebracht sind. Die thermische Anbindung der Wärmeerzeuger im Bereich des Stators an das Zwischengehäuse wird durch Ausgießen des inneren Hohlraums mit einer gut wärmeleitenden Vergussmasse erheblich verbessert werden. Alle genannten Kühlmöglichkeiten sind miteinander frei kombinierbar.

In einer weiteren vorteilhaften Ausführungsform kann die Rotorscheibe des Rotors einen Dämpferkäfig aufweisen, der aus zwei konzentrischen Ringen, die über radial verlaufende Stäbe verbunden sind, besteht. Diese Konstruktion des Dämpferkäfigs besteht aus Metall, insbesondere Aluminium. Sie umschließt die einzelnen Permanentmagnetsegmente an der Stirnseite der Rotorscheibe. Der so ausgebildete Dämpferkäfig kann äußerst platzsparend auf der dem Stator zugewandten Stirnseite der Rotorscheibe integriert werden und ist zudem kostengünstig herstellbar. Der Dämpferkäfig sorgt insbesondere bei Betrieb der Maschine als Motor dafür, dass bei Last- und/oder Drehzahlanderungen keine unerwünschten Schwingungen (Polradschwingen) der Rotorscheibe auftreten.

Die Erfindung wird im Folgenden anhand der Zeichnungen erläutert. Es zeigen:

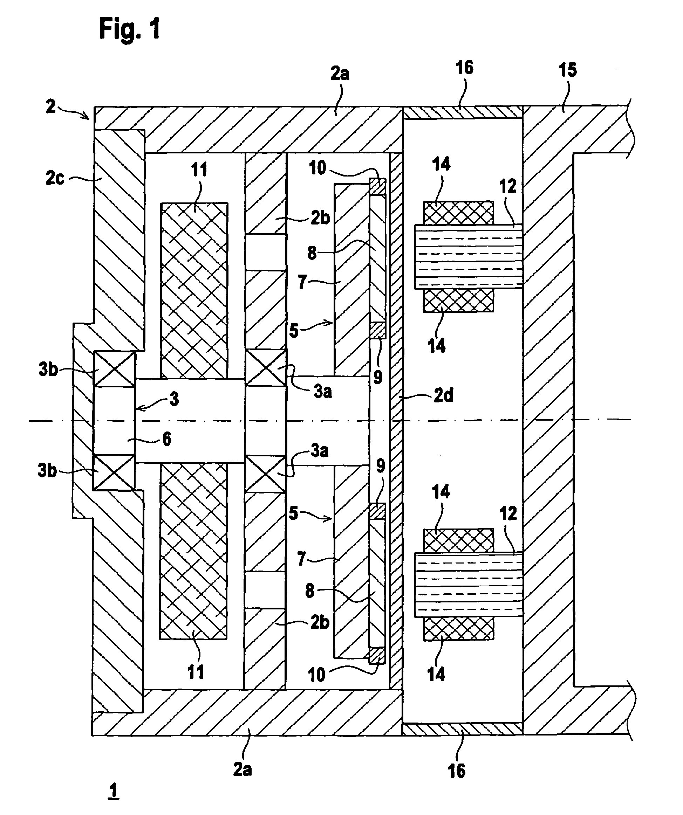

- Figur 1:: Ausführungsbeispiel der erfindungsgemäßen elektrischen Ma- schine.

Figur 1 zeigt ein Ausführungsbeispiel einer elektrischen Maschine 1, welche im vorliegenden Fall als permanenterregter Motor betrieben wird. Prinzipiell kann die elektrische Maschine 1 auch als Generator betrieben werden.

Zum Einsatz der elektrischen Maschine 1 in aggressiven Medien, wie zum Beispiel Kühlmitteln von Kühlaggregaten, ist der Teil der elektrischen Maschine 1, der mit diesen Medien in Kontakt kommen kann, durch ein hermetisch dichtes Gehäuse 2 gekapselt. Das Gehäuse 2 weist einen hohlzylindrischen Gehäusemantel 2a, zwei Lagerschilde 2b, 2c und eine Gehäusewand 2d auf. Dabei schließen der Lagerschild 2c und die Gehäusewand 2d die beiden stirnseitigen Öffnungen des Gehäusemantels 2a ab und bilden mit diesen die Wände des Gehäuses 2. Der Lagerschild 2b ist im Innern des Gehäuses 2 angeordnet. Dieses Gehäuse 2 bildet eine hermetische Kapselung. Prinzipiell kann das Gehäuse 2 auch eine halbhermetische Kapselung bilden.

Wie aus Figur 1 ersichtlich, ist in jedem der Lagerschilde 2b, 2c ein Lager 3a, 3b angeordnet. In den Lagern 3a, 3b ist als Bestandteil des mit einem Stator 4 zusammenwirkenden Rotors 5 der elektrischen Maschine 1 eine Rotorwelle 6 drehbar gelagert. Die Drehachse verläuft in der in axialer Richtung des Gehäuses 2 verlaufenden Symmetrieachse.

Als weiterer Bestandteil des Rotors 5 ist an der Rotorwelle 6 eine kreisscheibenförmige Rotorscheibe 7 befestigt, die mit der Rotorwelle 6 um deren Drehachse drehbar ist.

An der dem Stator 4 der elektrischen Maschine 1 zugeordneten Stirnseite der Rotorscheibe 7 sind mehrere konzentrisch zur Drehachse des Rotors 5 in Umfangsrichtung aufeinander folgende Permanentmagnetsegmente 8 aufgebracht. Die Permanentmagnetsegmente 8 bilden eine alternierende Folge von Magnetelementen unterschiedlicher Polarität, das heißt Nord- und Südpole bildende Permanentmagnetsegmente 8 sind abwechselnd hintereinander angeordnet. Wie insbesondere aus Figur 1 ersichtlich, sind die Permanentmagnetsegmente 8 auf der Stirnseite der Rotorscheibe 7 aufgebracht, so dass diese über die Stirnseite der Rotorscheibe 7 hervorstehen. Prinzipiell können die Permanentmagnetsegmente 8 auch in die Rotorscheibe 7 eingelassen sein.

Die Rotorscheibe 7 muss mindestens im Durchmesserbereich der Pennanentmagnetsegmente 8 aus magnetisierbarem Stahl bestehen und kann darunter oder darüber aus anderen Materialen gefertigt sein. In der Regel wird aber die ganze Rotorscheibe 7 aus ferromagnetischem Material bestehen.

Zur Unterdrückung von Schwingungen der Rotorscheibe 7 beim Betrieb der elektrischen Maschine 1, insbesondere bei Last- und Drehzahländerungen, ist an der Rotorscheibe 7 zusätzlich ein Dämpferkäfig vorgesehen. Dieser Dämpferkäfig besteht aus zwei auf der dem Stator 4 zugewandten Stirnseite der Rotorscheibe 7 aufgebrachten Ringen 9, 10, die an die inneren beziehungsweise äußeren Ränder der Permanentmagnetsegmente 8 anschließen. Der Dämpferkäfig wird komplettiert durch in radialer Richtung auf der Rotorscheibe 7 verlaufende nicht dargestellte Stäbe, die die beiden Ringe 9, 10 verbinden und welche in den Zwischenräumen zwischen den Permanentmagnetsegmenten 8 geführt sind. Die Komponenten des Dämpferkäfigs umschließen somit die Permanentmagnetsegmente 8 vollständig. Die Komponenten des Dämpferkäfigs bestehen aus paramagnetischem oder diamagnetischem Werkstoff, insbesondere Aluminium. Treten bedingt durch Last- oder Drehzahländerungen beim Betrieb der elektrischen Maschine 1 Schwingungen in der Rotorscheibe 7 auf, so werden im Dämpferkäfig Spannungen induziert, welche die Schwingungen dämpfen.

An der Rotorwelle 6 ist zudem ein Arbeitsmittel 11 befestigt. Das Arbeitsmittel 11 ist im vorliegenden Fall von einem Verdichter gebildet, der zur Verdichtung des Kühlmittels dient.

Wie aus Figur 1 ersichtlich, ist der Rotor mit dem Arbeitsmittel 11 in dem Gehäuse 2 angeordnet und somit hermetisch gekapselt.

Dagegen ist der Stator 4 außerhalb des Gehäuses 2 angeordnet. Dies ist deshalb unkritisch, da nur der Rotor 5 mit dem Arbeitsmittel 11, nicht jedoch der Stator 4 mit dem Kühlmittel in Kontakt kommt.

Sämtliche elektrischen Anschlussmittel, die als galvanische Verbindungen ausgebildet sind und welche insbesondere zur Zufuhr der benötigten Leistung der elektrischen Maschine 1 dienen, sind auf den Stator 4 geführt. Damit brauchen keine galvanischen Verbindungen zum Rotor 5 geführt werden. Da der Stator 4 außerhalb des Kühlmittels liegt, brauchen an die elektrischen Anschlussmittel am Stator 4 keine erhöhten Anforderungen gestellt werden und können in herkömmlicher Bauweise ausgeführt sein.

Der Rotor 5 und der Stator 4 sind durch die Gehäusewand 2d als Bestandteil der hermetischen Kapselung getrennt. Die Gehäusewand 2d besteht aus nichtmetallischem Material, so dass die Wechselwirkung zwischen Stator 4 und Rotor 4 nicht beeinträchtigt wird, das heißt der Stator 4 treibt, ungehindert durch die Gehäusewand 2d, den Rotor 5 an und versetzt so das Arbeitsmittel 11 in eine Drehbewegung.

Der Stator 4 der elektrischen Maschine 1 weist als Joch einen kreisringförmigen Blechpaketring 12 auf, der konzentrisch zur Rotorwelle 6 angeordnet ist. Der Blechpaketring 12 ist so dimensioniert, dass eine seiner Stirnseiten den Permanentmagnetsegmenten 8 auf der Rotorscheibe 7 in geringem Abstand gegenüberliegt. Der Außendurchmesser des Blechpaketrings 12 ist an den Auβendurchmesser der Rotorscheibe 7 angepasst. In den Blechpaketring 12 sind in radialer Richtung verlaufende, nicht dargestellte Nuten eingearbeitet. Die Nuten sind in gleichförmigen Winkelabständen über den Blechpaketring 12 verteilt und münden an dessen Mantelfläche aus, wobei diese zumindest teilweise an der Mantelfläche des Blechpaketrings 12 offen liegen. Der Blechpaketring 12 besteht aus einzelnen Blechstreifen, die zwischen 0,1 mm und 1 mm dick sein können. Die Dicke beträgt vorzugsweise 0,5 mm. Die Blechstreifen können axial oder radial aufgeschichtet sein.

Die Nuten des Blechpaketrings 12 dienen zur Aufnahme von Spulenwicklungen 14 als weiteren Komponenten des Stators 4. Die Spulenwicklungen 14 sind durch eine Harzimprägnierung mechanisch und thermisch an den Blechpaketring 12 angebunden. Durch die in radialer Richtung verlaufenden Nuten und die darin geführten Spulenwicklungen 14 entstehen im Stator 4 Zahnbereiche, deren Achsen parallel zur Drehachse der Rotorwelle 6 verlaufen. Da die Zahnbereiche den Permanentmagnetsegmenten 8 an der Stirnseite der Rotorscheibe 7 gegenüberliegen, wobei dazwischen ein geringer Luftspalt verbleibt, wird bei der erfindungsgemäßen elektrischen Maschine 1 ein in axialer Richtung, das heißt parallel zur Drehachse der Rotorwelle 6 verlaufendes magnetisches Luftspaltfeld zwischen Rotor 5 und Stator 4 erhalten. Gegenüber elektrischen Maschinen 1 mit in radialer Richtung verlaufenden Luftspaltfeldern wird eine erhebliche Reduzierung des Jochvolumens und damit des Jochgewichts erhalten.

Der Anschluss der herausgeführten Wicklungsenden der Spulenwicklungen 14 erfolgt an eine Leistungselektronik, die in der Lage ist, frequenzvariable Ausgangsspannungen zu erzeugen oder in Abhängigkeit der Rotorlage Spannungsblöcke phasenrichtig weiterzuschalten. Im ersten Fall arbeitet der Motor als permanenterregte Synchronmaschine und im zweiten Fall als elektronisch kommutierte "Gleichstrommaschine" beziehungsweise EC-Motor.

Wie aus Figur 1 ersichtlich, sitzt der Stator 4 auf einem Statorträger 15 auf. Es ist eine mechanische Verbindung zwischen dem Statorträger 15 und dem Gehäuse 2 durch ein hohlzylindrisches Zwischengehäuse 16 realisiert. Der von dem Zwischengehäuse 16, dem Statorträger 15 und der Gehäusewand 2d begrenzte Innenraum ist mit einer Vergussmasse mit hoher Wärmeleitfähigkeit ausgegossen, um so eine thermische Anbindung an das Zwischengehäuse 16, den Statorträger 15 und die Gehäusewand 2d zu schaffen.

### Bezugszeichenliste

- (1): elektrische Maschine
- (2): Gehäuse
- (2a): Gehäusemantel
- (2b): Lagerschild
- (2c): Lagerschild
- (2d): Gehäusewand
- (3a): Lager
- (3b): Lager
- (4): Stator
- (5): Rotor
- (6): Rotorwelle
- (7): Rotorscheibe
- (8): Positioniersystem
- (9): Ring
- (10): Ring
- (11): Arbeitsmittel
- (12): Blechpaketring
- (14): Spulenwicklung
- (15): Statorträger
- (16): Zwischengehäuse

## Patentansprüche

1. Elektrische Maschine, betreibbar als Motor oder Generator, mit einem Stator (4) und um eine Drehachse drehbaren Rotor (5), wobei zwischen Rotor (5) und Stator (4) ein bezüglich der Drehachse axiales Luftspaltfeld generiert ist, wobei der Rotor (5) in einem hermetisch oder halbhermetisch gekapselten Gehäuse (2) integriert ist und der Stator (4) außerhalb dieses Gehäuses (2) angeordnet ist, wobei zwischen Rotor (5) und Stator (4) eine nichtmetallische Gehäusewand (2d), die Bestandteil des Gehäuses (2) ist, angeordnet ist wobei der Stator (4) an einem Statorträger (15) befestigt ist, wobei als mechanische Verbindung zwischen Gehäuse (2) und Statorträger (15) ein Zwischengehäuse (16) vorgesehen ist, **dadurch gekennzeichnet, dass** der Stator (4) mit einer Vergussmasse mit hoher Wärmeleitfähigkeit an das Gehäuse (2) und das Zwischengehäuse (16) und den Statorträger (15) thermisch angebunden ist.

2. Elektrische Maschine nach Anspruch 1, **dadurch gekennzeichnet, dass** sämtliche elektrischen Anschlussmittel außerhalb des Gehäuses (2) angeordnet sind.

3. Elektrische Maschine nach Anspruch 2, **dadurch gekennzeichnet, dass** elektrische Anschlussmittel zur Leistungszufuhr eine galvanische Verbindung mit dem Stator (4) bilden.

4. Elektrische Maschine nach einem der Ansprüche 1 bis 3, **dadurch gekennzeichnet, dass** der Rotor (5) eine um die Drehachse drehbare Rotorwelle (6) und eine an der Rotorwelle (6) gelagerte Rotorscheibe (7) aufweist, an deren dem Stator (4) zugewandten Stirnseite Permanentmagnetsegmente (8) angeordnet sind.

5. Elektrische Maschine nach Anspruch 4, **dadurch gekennzeichnet, dass** an der Rotorwelle (6) ein Arbeitsmittel (11) gelagert ist.

6. Elektrische Maschine nach Anspruch 5, **dadurch gekennzeichnet, dass** das Arbeitsmittel (11) von einem Verdichter oder Ventilator gebildet ist.

7. Elektrische Maschine nach einem der Ansprüche 4 bis 6, **dadurch gekennzeichnet, dass** an der Rotorscheibe (7) ein Dämpferkäfig angeordnet ist.

8. Elektrische Maschine nach einem der Ansprüche 1 bis 7, **dadurch gekennzeichnet, dass** der Stator (4) als Joch einen Blechpaketring (12) aufweist.

9. Elektrische Maschine nach Anspruch 8, **dadurch gekennzeichnet, dass** auf dem Blechpaketring (12) Spulenwicklungen(14) aufgebracht sind.

10. Elektrische Maschine nach Anspruch 9, **dadurch gekennzeichnet, dass** der Blechpaketring (12) Nuten zur Aufnahme der Spulenwicklungen (14) aufweist.

## Claims

1. Electrical machine, which is operable as a motor or generator, with a stator (4) and a rotor (5) rotatable about an axis of rotation, wherein an air gap field axial with respect to the axis of rotation is generated between rotor (5) and stator (4), wherein the rotor (5) is integrated in a hermetically or semi-hermetically encapsulated housing (2) and the stator (4) is arranged outside this housing (2), wherein a non-metallic housing wall (2d), which is a component of the housing (2), is arranged between rotor (5) and stator (4), wherein the stator (4) is fastened to a stator support (15) and wherein an intermediate housing (16) is provided as mechanical connection between housing (2) and stator support (15), **characterised in that** the stator (4) is thermally connected with the housing (2), the intermediate housing (16) and the stator support (15) by a casting material with high thermal conductivity.

2. Electrical machine according to claim 1, **characterised in that** all electrical connecting means are arranged outside the housing (2).

3. Electrical machine according to claim 2, **characterised in that** electrical connecting means for the feed of current form a conductive connection with the stator (4).

4. Electrical machine according to any one of claims 1 to 3, **characterised in that** the rotor (5) comprises a rotor shaft (6) which is rotatable about the axis of rotation and a rotor disc (7), which is mounted on the rotor shaft (6) and at the end face of which facing the stator (4) permanent magnet segments (8) are arranged.

5. Electrical machine according to claim 4, **characterised in that** a working means (11) is mounted on the rotor shaft (6).

6. Electrical machine according to claim 5, **characterised in that** the working means (11) is formed a compressor or fan.

7. Electrical machine according to any one of claims 4 to 6, **characterised in that** a dampening cage is arranged at the rotor disc (7).

8. Electrical machine according to any one of claims 1 to 7, **characterised in that** the stator (4) comprises a laminated core ring (12) as yoke.

9. Electrical machine according to claim 8, **characterised in that** coil windings (14) are mounted on the laminated core ring (12).

10. Electrical machine according to claim 9, **characterised in that** the laminated core ring (12) has grooves for reception of the coil windings (14).

## Revendications

1. Machine électrique, pouvant fonctionner comme moteur ou générateur, avec un stator (4) et un rotor (5) pouvant tourner autour d'un axe de rotation, dans laquelle un champ d'entrefer axial par rapport à l'axe de rotation est généré entre rotor (5) et stator (4), le rotor (5) étant intégré dans un boîtier (2) encapsulé hermétiquement ou semi-hermétiquement et le stator (4) disposé à l'extérieur de ce boîtier (2), une paroi de boîtier (2d) non métallique, qui fait partie du boîtier (2), étant disposée entre rotor (5) et stator (4), le stator (4) étant fixé à un support de stator (15), un boîtier intermédiaire (16) étant prévu comme liaison mécanique entre boîtier (2) et support de stator (15), **caractérisée en ce que** le stator (4) est relié thermiquement au boîtier (2), au boîtier intermédiaire (16) et au support de stator (15) par une masse de scellement à haute conductivité thermique.

2. Machine électrique selon la revendication 1, **caractérisée en ce que** tous les moyens de connexion électriques sont disposés à l'extérieur du boîtier (2).

3. Machine électrique selon la revendication 2, **caractérisée en ce que** des moyens de connexion électriques servant à l'amenée de puissance forment une liaison galvanique avec le stator (4).

4. Machine électrique selon une des revendication 1 à 3, **caractérisée en ce que** le rotor (5) présente un arbre de rotor (6) pouvant tourner autour de l'axe de rotation et un disque de rotor (7) monté sur l'arbre de rotor (6), sur la face frontale duquel qui est tournée vers le stator (4) sont disposés des segments d'aimant permanent (8).

5. Machine électrique selon la revendication 4, **caractérisée en ce qu'**un moyen de travail (11) est monté sur l'arbre de rotor (6).

6. Machine électrique selon la revendication 5, **caractérisée en ce que** le moyen de travail (11) est formé par un compresseur ou un ventilateur.

7. Machine électrique selon une des revendications 4 à 6, **caractérisée en ce qu'**une cage d'amortissement est disposée sur le disque de rotor (7).

8. Machine électrique selon une des revendications 1 à 7, **caractérisée en ce que** le stator (4) présente un paquet de tôles annulaire (12) comme culasse.

9. Machine électrique selon la revendication 8, **caractérisée en ce que** des enroulements de bobine (14) sont montés sur le paquet de tôles annulaire (12).

10. Machine électrique selon la revendication 9, **caractérisée en ce que** le paquet de tôles annulaire (12) présente des encoches pour recevoir les enroulements de bobine (14).
